# EUROPÄISCHE PATENTSCHRIFT

(11) **EP 0 556 186 B1**
(45) Veröffentlichungstag und Bekanntmachung des Hinweises auf die Patenterteilung: **25.01.1995**
(21) Anmeldenummer: 91914902.1
(22) Anmeldetag: 21.08.1991
(51) Int. Cl.: B01D 25/12

(54) **MEMBRANPLATTE FÜR PLATTENFILTERPRESSEN**
MEMBRANE PLATE FOR PLATE FILTER PRESSES
PLAQUES-MEMBRANES POUR PRESSES A FILTRER

(30) Priorität: 06.06.1991 DE 4118620
(43) Veröffentlichungstag der Anmeldung: 25.08.1993
(73) Patentinhaber: Eberhard Hoesch & Söhne GmbH Verfahrens- und Anlagentechnik, D-52477 Alsdorf (DE)
(72) Erfinder: BONN, Heinz, D-5166 Kreuzau-Winden (DE)
(74) Vertreter: Langmaack, Jürgen, Dipl.-Ing.
(86) Internationale Anmeldenummer: EP9101584
(87) Internationale Veröffentlichungsnummer: WO9221423

(56) Entgegenhaltungen:
- EP-A- 0 357 015
- DE-A- 3 520 653
- GB-A- 2 157 585

## Beschreibung

Die Erfindung betrifft eine Membranplatte für Plattenfilterpressen, die eine Plattenwand mit umlaufendem Plattenrahmen aufweist, durch den zusammen mit den benachbarten Filterplatten zu beiden Plattenseiten hin eine Kammer begrenzt wird, und die wenigstens auf einer Plattenseite mit einer mit einem Druckmittel beaufschlagbaren Preßmembran versehen ist, die einen umlaufenden Randwulst aufweist, der im Übergangsbereich zwischen Plattenrahmen und Plattenwand in einer Nut festgelegt ist und der auf seiner der Nachbarplatte zugekehrten Seite mit einem Halterahmen abgedeckt ist, der am Plattenrand senkrecht zur Plattenebene begrenzt bewegbar befestigt ist und der bei geöffneter Kammer die von der Anlagefläche des Rahmens definierte Ebene überragt.

Eine Membranplatte der eingangs bezeichneten Art ist aus der DE-A-35 20 653 bekannt. Da der Halterahmen bei der bekannten Membranplatte senkrecht zur Plattenebene bewegbar mit dem Plattenrahmen verbunden ist, kann der Randwulst bei geöffneter Kammer lose oder nur mit geringer Vorspannung in der Nut gehalten werden. Das Material des Randwulstes wird also erst dann über den bewegbaren Halterahmen verpreßt, wenn das Filterplattenpaket geschlossen wird. Der Grad der Verformung wird hierbei durch das Maß eindeutig bestimmt, mit dem der Halterahmen die von der Anlagefläche des Plattenrahmens definierte Ebene überragt. Sobald die Kammer wieder geöffnet wird, kann sich das Material des Randwulstes wieder entspannen, so daß bei den verhältnismäßig langen Öffnungszeiten beim Betrieb einer derartigen Plattenfilterpresse das Material des Randwulstes sich erholen kann. Da der Halterahmen ferner einen Teil des angrenzenden Membranrandes ebenfalls überdeckt, ergibt sich eine ausreichende Abdichtung des zwischen Plattenwand und Membran liegenden Druckraumes bei geschlossener Kammer, die es erlaubt, sehr hohe Preßdrücke auf die Membran aufzubringen. Bei geschlossener Kammer wird das Filtertuch nicht auf den Membranwerkstoff aufgepreßt, sondern lediglich auf den viel widerstandsfähigeren Werkstoff des Halterahmens, so daß auch hier die Gefahr von örtlichen Überbeanspruchungen, die Ausgangspunkt für Risse sein können, vermieden ist. Die Befestigung des Halterahmens am Plattenrahmen erfolgt über federnde Schnappstifte.

Der Erfindung liegt nun die Aufgabe zugrunde, durch eine Verbesserung der Verbindung zwischen Preßmembran und Membranplatte sowie durch eine Verbesserung der geometrischen Verhältnisse im Übergangsbereich die bekannte Membranplatte noch zu verbessern.

Diese Aufgabe wird erfindungsgemäß dadurch gelöst, daß der Plattenrahmen an seinem der Umfangsfläche des Halterahmens zugekehrten Rand mit einer umlaufenden Nut versehen ist und daß der Halterahmen mit einem umlaufenden, der Nut zugeordneten stegförmigen Vorsprung aus elastischem Material versehen ist, der in die Nut eingreift und die Bewegung des Halterahmens senkrecht zur Plattenebene begrenzt. Diese Ausgestaltung hat gegenüber der vorbekannten Verbindung über federnd gelagerte Schnappstifte den Vorteil einer erheblichen Fertigungsvereinfachung, da in den Plattenrahmen lediglich eine durchlaufende Nut einzuformen ist. Da der stegförmige Vorsprung aus einem elastischen Material ist, läßt sich dieser nach dem Auflegen des Halterahmens auf den Randwulst in einfacher Weise in die Nut eindrücken, so daß der Halterahmen mit dem Plattenrahmen formschlüssig, aber bewegbar veriegelt ist. In bevorzugter Ausgestaltung der Erfindung ist hierbei vorgesehen, daß zumindest der Halterahmen mit der Preßmembran im Bereich des Randwulstes fest verbunden ist. Zweckmäßig ist es hierbei ferner, wenn auch der stegförmige Vorsprung mit dem Halterahmen fest verbunden ist. Da sowohl die Preßmembran als auch der stegförmige Vorsprung aus Gründen der Dichtwirkung aus einem im Vergleich zum Halterahmen weichen Material, insbesondere Gummi, hergestellt sein müssen, muß der Halterahmen mit dem Rand der Preßmembran und/oder mit dem stegförmigen Vorsprung verklebt oder durch Vulkanisieren verbunden werden, sofern der Halterahmen selbst aus einem Gummiwerkstoff mit höherer Shore-Härte hergestellt ist. Ein weiterer Vorteil der erfindungsgemäßen Lösung gegenüber dem Vorbekannten besteht darin, daß der als Befestigungsmittel für den Halterahmen dienende stegförmige Vorsprung ebenfalls aus einem korrosionsbeständigen nichtmetallischen Werkstoff hergestellt werden kann, so daß abgesehen von den Ausnahmefällen einer Heißfiltration derartige Filterplatten vollständig aus nichtmetallischen Werkstoffen, insbesondere aus Kunststoff und/oder Gummi, herstellbar sind.

In zweckmäßiger Ausgestaltung der Erfindung ist vorgesehen, daß der Halterahmen auf seiner Umfangsfläche einen umlaufenden Stützsteg für den stegförmigen Vorsprung aufweist. Diese Anordnung hat den Vorteil, daß in Einbauposition der Halterahmen über den stegförmigen Vorsprung formschlüssig im Plattenrahmen gehalten wird, so daß sowohl bei einem lose eingedrückten stegförmigen Vorsprung als auch bei einem mit dem Halterahmen fest verbundenen stegförmigen Vorsprung bei geöffneter Plattenfilterpresse der Halterahmen und damit die Preßmembran zuverlässig gehalten werden. Zweckmäßig ist es hierbei, wenn der stegförmige Vorsprung einen am Stützsteg des Halterahmens anliegenden Dichtkörper aufweist. Hierdurch wird der für die Bewegung des Halterahmens erforderliche Spalt zwischen Plattenrahmen und Halterahmen zuverlässig abgedichtet. Dies ist insbesondere dann vorteilhaft, wenn in weiterer Ausgestaltung der Erfindung der Plattenrahmen an seinen dem Halterahmen zugekehrten Rand zwischen dem Anlagebereich des Randwulstes einerseits und des stegförmigen Vorsprungs andererseits, eine über wenigstens einen Teil des Umfangs sich erstreckende kanalförmige Ausnehmung aufweist, die über Bohrungen jeweils mit den im Plattenrahmen verlaufenden Kanalbohrungen für Filtrat und Waschflüssigkeit in Verbindung steht, und daß im Halterahmen Querbohrungen angeordnet sind, die jeweils die Kammer mit der kanalförmigen Ausnehmung verbinden. Hierdurch ist ein zwischen Plattenrahmen und Halterahmen verlaufender abgedichteter Kanal vorhanden, der einen einwandfreien Flüssigkeitsablauf im Randbereich des Filterkuchens gewährleistet. Da für die meisten Einsatzfälle derartige Filterplatten aus einem Kunststoff hergestellt werden, bietet die erfindungsgemäße Lösung darüber hinaus den Vorteil, über die Zahl und/oder die Lage der vorhandenen Querbohrungen in bezug auf die Kanalbohrungen den Filtratablauf und damit die Kuchenbildung beeinflussen zu können.
Die erfindung wird anhand schematischer Zeichnungen von Ausführungsbeispielen näher erläutert. Es zeigen:
- Fig. 1: perspektivisch, teilweise im Schnitt, eine Membranplatte mit Doppelmembran und benachbarter Filterplatte,
- Fig. 2: in vergrößertem Maßstab und im Schnitt die Randbefestigung der Membrane.

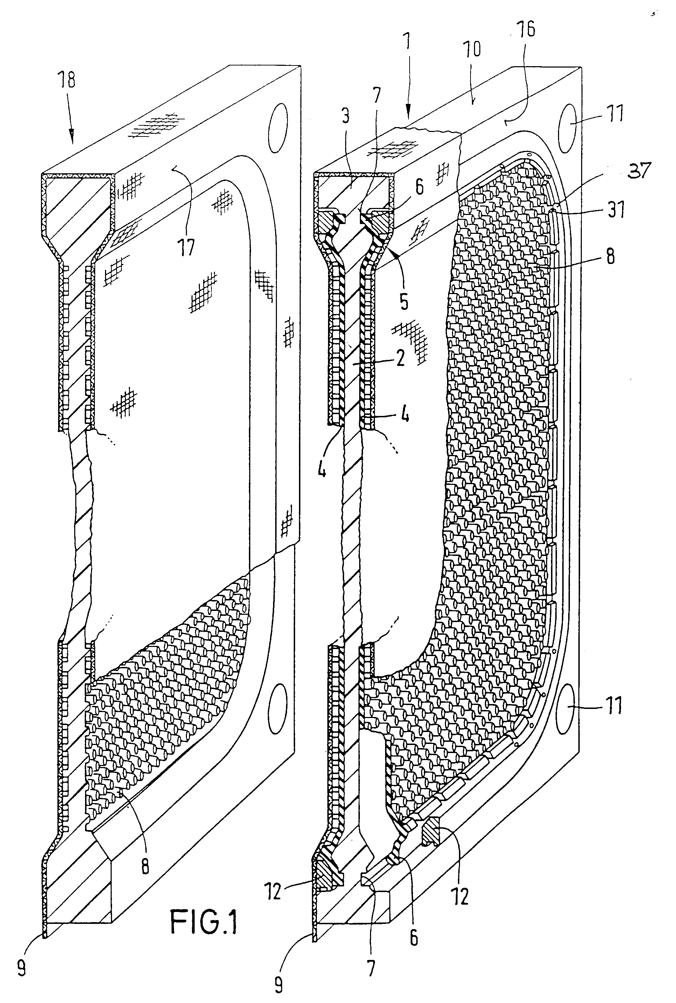

Die in Fig. 1 dargestellte Membranplatte 1 für eine Plattenfilterpressen mit vertikal ausgerichteten Filterplatten weist eine Plattenwand 2 auf, die mit einem umlaufenden Plattenrahmen 3 versehen ist. Der Plattenrahmen 3 ist in seiner Dicke so bemessen, daß er die beiden Flächen der Plattenwand 2 überragt. Mehrere derartiger Membranplatten 1 nebeneinander oder abwechselnd angeordnet mit einfachen Filterplatten 18 ohne Membran oder auch abwechselnd mit einfachen Rahmen bilden zusammen das Filterplattenpaket einer Filterplattenpresse. Je nach Ausführungsform der Filterpresse können derartige Membranplatten auch nur auf einer Seite mit einer Membran versehen sein, was insbesondere bei Plattenfilterpressen mit horizontal ausgerichteten Filterplatten angewendet wird.

Auf der Plattenwand 2 liegt auf beiden Seiten eine Preßmembran 4 auf, die im Übergangsbereich 5 zwischen Plattenrahmen 3 und Plattenwand 2 mittels einer Randwulst 6 in einer Nut 7 festgelegt ist. Die aus einem elastischen Werkstoff, beispielsweise einer entsprechenden Gummiqualität hergestellte Preßmembran 4 ist jeweils auf ihrer der Plattenwand 2 abgekehrten Fläche mit einer Vielzahl von noppenartigen Vorsprüngen 8 versehen, die das darüber gelegte Filtertuch 9 abstützen. Bei der dargestellten Ausführungsform ist das Filtertuch über die Oberkante 10 des Plattenrahmens 3 übergehängt und an den jeweils zugehörigen Stellen mit Durchtrittsöffnungen versehen, die mit den Kanalbohrungen 11 im Plattenrahmen korrespondieren. Bei der Darstellung ist der mittlere Bereich der Filterplatte nicht dargestellt, der hier je nach Konstruktion die Platte insgesamt eine geschlossene Fläche aufweisen kann oder aber auch mit einer entsprechenden Durchtrittsarmatur für einen zentralen Trübeablauf versehen sein kann. Die Ausgestaltung dieses Bereichs ist jedoch für das Verständnis der erfindungsgemäßen Konstruktion ohne Belang.

Wie nachstehend noch anhand der vergrößerten Schnittdarstellung näher erläutert werden wird, wird der Randwulst 6 der Preßmembran 4 durch einen Halterahmen 12 befestigt, der über entsprechende Befestigungsmittel senkrecht zur Plattenebene hin- und herbewegbar am Plattenrahmen 3 gehalten ist. Wie die Darstellung erkennen läßt, überdeckt das Filtertuch 9 sowohl den Plattenrahmen 3 als auch den Halterahmen 12.

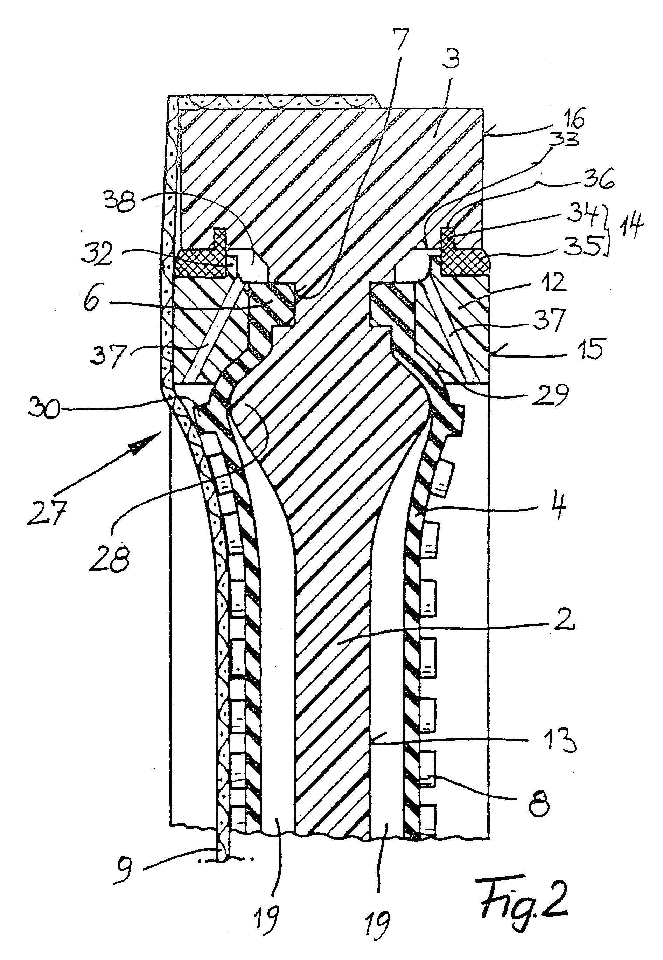

Wie die vergrößerte Schnittdarstellung in Fig. 2 erkennen läßt, liegt die Nut 7 zur Aufnahme des Randwulstes 6 der Preßmembran 4 etwa in Höhe der jeweiligen Außenebene 13 der Plattenwand 2. Im Bereich des Randwulstes 6 ist die Preßmembran 4 durch den Halterahmen 12 abgedeckt, der über entsprechende, nachstehend noch näher beschriebene Befestigungsmittel 14 befestigt ist. Die Befestigungsmittel 14 sind hierbei so ausgebildet, daß sie den Halterahmen 12 unter nur geringfügiger Verpressung des Randwulstes 6 auf diesen bei geöffneter Kammer andrücken. Dieser Betriebszustand ist in Fig. 2 dargestellt. Hierbei überragt die Ebene 15 des Halterahmens 12 die als Anlagefläche dienende Ebene 16 des Plattenrahmens 3. Die Höhendifferenz zwischen der Ebene 16 und der Ebene 15 ist hierbei so vorgegeben, daß beim Anpressen der Anlagefläche 17 der in Fig. 1 ebenfalls gezeigten und als reine Filterplatte ausgebildeten Nachbarplatte 18 die gewünschte Verformung des Randwulstes 6 erreicht wird, so daß bei geschlossener Kammer die Ebene 15 und die Ebene 16 in einer gemeinsamen Ebene liegen. Hierdurch wird der zwischen Plattenwand 2 und Membran 4 liegende Druckraum 19 zum Rand hin abgedichtet, wobei wiederum die aus der definierten Verformung des Randwulstes 6 ableitbare Dichtkraft in Verbindung mit der vorgegebenen Wanddicke der Preßmembran 4 den höchstzulässigen Preßdruck für das in die Druckkammer 19 einzuleitende Druckmittel bestimmt.

Sobald die Filterkammer geöffnet wird, kann der Randwulst sich praktisch vollständig bis auf die geringfügige Vorspannung entlasten. Das Material des Randwulstes kann sich während der Dauer der Öffnungszeit "erholen".

In Fig. 2 ist in größerem Maßstab und im Schnitt das Befestigungsmittel für die Verbindung zwischen Plattenrahmen 3 und Halterahmen 12 dargestellt. Bei der dargestellten Ausführungsform ist die Membran 4 beispielsweise aus einem Gummi mit einer Shore-Härte 65 hergestellt. Der zugehörige Halterahmen 12 ist ebenfalls aus einem Gummi hergestellt, der jedoch härter eingestellt ist und beispielsweise eine Shore-Härte von 78 aufweist. Da beide Elemente aus einem Gummi hergestellt sind, kann somit der Halterahmen mit dem Bereich der Randwulstes 6 der Membran 4 durch Vulkanisieren fest verbunden werden. Bei der Verwendung von Kunststoffen für Halterahmen und Membran lassen sich beide Elemente entsprechend verschweißen.

Auf seiner dem Plattenrahmen 3 zugekehrten Umfangsfläche ist nun der Halterahmen 12 mit einem Stützsteg 32 versehen, der mit seiner Außenkante bis dicht an die dem Halterahmen zugekehrte Umfangsfläche 33 des Plattenrahmens 3 heranreicht. An diesem Stützsteg 32 liegt nunmehr als Befestigungsmittel 14 ein stegförmiger Vorsprung 34 aus einem weichen Gummi oder Kunststoff an, der sich im Bereich des Halterahmens 12 zu einem Dichtkörper 35 erweitert, der den Spalt zwischen der Umfangsfläche des Halterahmens 12 und der innenliegenden Umfangsfläche des Plattenrahmens 3 ausfüllt. Der stegförmige Vorsprung 34 liegt hierbei mit seinem Außenrand in einer umlaufenden Nut 36 in der innenliegenden Umfangsfläche 33 des Plattenrahmens 3. Der stegförmige Vorsprung 34 mit seinem Dichtkörper kann nunmehr nach dem Einlegen der Membran 4 mit dem fest verbundenen Halterahmen 12 von außen in die Nut 36 eingedrückt werden. Bei Ausführungsformen, bei denen der stegförmige Vorsprung mit seinem Dichtkörper 35 fest mit dem Halterahmen verbunden ist, läßt sich der Halterahmen durch leichte Verformung in der Plattenebene nach innen mit dem stegförmigen Vorsprung 34 in die Nut einrasten. Der als Befestigungsmittel dienende stegförmige Vorsprung 34 ist hierbei so bemessen, daß der Randwulst 6 in eingerastetem Zustand, wie in Fig. 2 dargestellt, ganz gering verpreßt ist. Die Elastizität des stegförmigen Vorsprungs 34 gewährleistet die Bewegbarkeit des Halterahmens 12, so daß beim Schließen der Kammer die durch den Halterahmen 12 definierte Ebene 15 unter gleichzeitiger Verformung des Randwulstes 6 auf die Höhe der vom Plattenrahmen definierten Ebene 16 herabgedrückt werden kann. Hierbei wird der Randwulst 6, der einen kleineren Querschnitt aufweist als die Nut 7, in die Nut 7 hineingeformt, so daß hier eine einwandfreie Abdichtung der Preßmembran auf ihrer Rückseite, d.h. auf der Seite des Druckraumes erzielt wird, die Preßdrücke von über 10 bar zuläßt.

Wie aus der Schnittdarstellung ersichtlich, ist die Preßmembran 4 im Anschluß an den Randwulst 6 mit einer umlaufenden, in Richtung auf die Kammer weisenden Auswölbung 27 versehen, der auf ihrer Rückseite eine entsprechend umlaufende Auswölbung 28 der Plattenwand 2 zugeordnet ist.

Wie aus Fig. 2 ersichtlich, wird beim Beaufschlagen des Druckraumes 19 mit Druckmittel die Preßmembran in den Kammerraum hinein vorgestülpt. Um nun die Dehnungen des Membranmaterials im Randbereich zu reduzieren, der ohnehin durch die von den Klemmkräften herrührenden Belastungen hoch belastet ist, ist im Scheitelbereich der Auswölbung 27 auf der der Kammer zugekehrten Seite parallel zum Innenrand des Halterahmens 12 ein umlaufender Stützwulst 30 vorgesehen. Wenn nun die Preßmembran beim Preßvorgang vollständig mit Druckmittel beaufschlagt wird und sich weit in die Kammer hineinstülpt, legt sich etwa zu dem Zeitpunkt, zu dem die Preßmembran im Bereich der Platte 2 parallel zu dieser verläuft, der Stützwulst 30 am Innenrand des Halterahmens 12 an und begrenzt hiermit die Bewegung in diesem Bereich. Die weitere Verformung der Preßmembran bei fortschreitender Verpressung erfolgt dann in noch größerem Abstand vom Befestigungsrand der Preßmembran, so daß insgesamt kritische Beanspruchungen der Preßmembran in dem besonders gefährdeten Randbereich vermieden werden.

Der Stützwulst 30 braucht jedoch nicht durchlaufend ausgebildet zu sein sondern kann, wie die perspektivische Darstellung in Fig. 1 zeigt, in gleichmäßigen Abständen durch radial zum Plattenrand ausgerichtete Nuten 31 unterbrochen sein. Diesen Nuten 31 sind in etwa gleichachsig ausgerichtete Bohrungen 37 im Halterahmen 12 zugeordnet, die, wie der Schnitt in Fig. 2 zeigt, in eine im Randbereich umlaufende kanalförmige Ausnehmung 38 ausmünden. Die Nuten 31 und Bohrungen 37 dienen dazu, auch im Randbereich einen Flüssigkeitsabzug zu ermöglichen und so auch im Randbereich ein nahezu vollständiges Auspressen des Filterkuchens zu gewährleisten, da die Ausnehmungen 38 über entsprechende, nicht dargestellte Bohrungen im Plattenrahmen 3 im Bereich der Kanalbohrungen 11 mit diesen in Verbindung stehen.

## Patentansprüche

1. Membranplatte für Plattenfilterpressen, die eine Plattenwand (2) mit umlaufendem Plattenrahmen (3) aufweist, durch den zumindest auf einer Plattenseite eine Vertiefung begrenzt wird, und die wenigstens auf der mit einer Vertiefung versehenen Plattenseite mit einer, mit einem Druckmittel beaufschlagbaren Preßmembran (4) versehen ist, die einen umlaufenden Randwulst (6) aufweist, der im Übergangsbereich (5) zwischen Plattenrahmen (3) und Plattenwand (2) in einer Nut (7) festgelegt ist und der auf seiner außenliegenden Seite mit einem Halterahmen (12) abgedeckt ist, der am Plattenrahmen (3) senkrecht zur Plattenebene begrenzt bewegbar befestigt ist und der in entlastetem Zustand die von der Anlagefläche (16) des Plattenrahmens (3) definierte Ebene überragt, **dadurch gekennzeichnet,** daß der Plattenrahmen (3) an seinem der Umfangsfläche des Halterahmens (12) zugekehrten Rand mit einer umlaufenden Nut (36) versehen ist und daß der Halterahmen (12) mit einem umlaufenden, der Nut (36) zugeordneten stegförmigen Vorsprung (34) aus elastischem Material versehen ist, der in die Nut (36) eingreift und die Bewegung des Halterahmens (12) senkrecht zur Plattenebene begrenzt.

2. Membranplatte nach Anspruch 1, dadurch gekennzeichnet, daß der Halterahmen (12) mit der Preßmembran (4) im Bereich des Randwulstes (6) fest verbunden ist.

3. Membranplatte nach Anspruch 1 oder 2, dadurch gekennzeichnet, daß der Halterahmen (12) auf seiner Umfangsfläche einen umlaufenden Stützsteg (32) für den stegförmigen Vorsprung (34) aufweist.

4. Membranplatte nach einem der Ansprüche 1 bis 3, dadurch gekennzeichnet, daß der stegförmige Vorsprung (34) einen am Stützsteg (32) des Halterahmens (12) anliegenden Dichtkörper (35) aufweist.

5. Membranplatte nach einem der Ansprüche 1 bis 4, dadurch gekennzeichnet, daß der stegförmige Vorsprung (34) mit dem Halterahmen (12) fest verbunden ist.

6. Membranplatte nach einem der Ansprüche 1 bis 5, dadurch gekennzeichnet, daß der Plattenrahmen (3) an seinem dem Halterahmen (12) zugekehrten Rand (33) zwischen dem Anlagebereich des Randwulstes (6) einerseits und des stegförmigen Vorsprungs (34) andererseits eine über wenigstens einen Teil des Umfanges sich erstreckende kanalförmige Ausnehmung (38) aufweist, die über Bohrungen jeweils mit den im Plattenrahmen (3) verlaufenden Kanalbohrungen (11) für Filtrat und Waschflüssigkeit in Verbindung stehen, und daß im Halterahmen (12) Querbohrungen (37) angeordnet sind, die jeweils die Kammer mit der kanalförmigen Ausnehmung (38) verbinden.

## Claims

1. Membrane plate for plate filter presses which comprises a plate wall (2) with an encircling plate frame (3), by means of which a cavity is defined at least on one plate side, and is provided at least on the plate side having a cavity with a pressure membrane (4) which can be acted upon by a pressure medium and comprises an encircling bead (6) which is fined in a groove (7) in the transition area (5) between the plate frame (3) and the plate wall (2) and is covered on its external side by a holding frame (12) which is secured to the plate frame (3) such that it can move perpendicularly to the plate plane within limits and projects beyond the plane defined by the contact surface (16) of the plate frame (3) in the unloaded state, characterised in that the plate frame (3) is provided at its edge which faces the circumferential surface of the holding frame (12) with an encircling groove (36), and that the holding frame (12) is provided with an encircling ridge-shaped projection (34) of an elastic material which is associated with the groove (36), engages in the latter and limits the movement of the holding frame (12) perpendicularly to the plate plane.

2. Membrane plate according to claim 1, characterised in that the holding frame (12) is firmly connected to the pressure membrane (4) in the area of the bead (6).

3. Membrane plate according to claim 1 or 2, characterised in that the holding frame (12) comprises an encircling support ridge (32) on its circumferential surface for the ridge-shaped projection (34).

4. Membrane plate according to one of claims 1 to 3, characterised in that the ridge-shaped projection (34) comprises a sealing body (35) bearing against the support ridge (32) of the holding frame (12).

5. Membrane plate according to one of claims 1 to 4, characterized in that the ridge-shaped projection (34) is firmly connected to the holding frame (12).

6. Membrane plate according to one of claims 1 to 5, characterized in that, at its edge (33) which faces the holding frame (12), the plate frame (3) comprises between the contact area of the bead (6) on one side and the ridge-shaped projection (34) on the other a channel-shaped recess (38) which extends over at least a part of the circumference and is connected via bores to each of the channel bores (11), which extend in the plate frame (3), for filtrate and washing liquid, and that cross-bores (37) are disposed in the holding frame (12) and each connect the chamber to the channel-shaped recess (38).

## Revendications

1. Plaque-membrane pour presses à filtrer à plaques, qui présente une paroi de plaque (2) à encadrement de plaque (3) périphérique par lequel est délimité un creux, au moins d'un côté de la plaque, et qui est pourvue, au moins du côté de la plaque muni d'un creux, d'une membrane de pression (4) pouvant être soumise à un fluide sous pression et présentant un bourrelet de bordure (6) périphérique qui est fixé dans une rainure (7) dans la zone de transition (5) entre l'encadrement de plaque (3) et la paroi de plaque (2) et qui est recouvert, sur son côté extérieur, d'un cadre de retenue (12) fixé sur l'encadrement de plaque (3), mobile de manière limitée perpendiculairement au plan de la plaque, et dépassant, à l'état déchargé, le plan défini par la surface d'appui (16) de l'encadrement de plaque (3), caractérisée en ce que l'encadrement de plaque (3) est pourvu, sur son bord tourné vers la face périphérique du cadre de retenue (12), d'une rainure périphérique (36) et que le cadre de retenue (12) est pourvu d'une saillie périphérique (34) en forme de languette en un matériau élastique, associée à la rainure (36), qui s'engage dans la rainure (36) et limite le mouvement du cadre de retenue (12) perpendiculairement au plan de la plaque.

2. Plaque-membrane suivant la revendication 1, caractérisée en ce que le cadre de retenue (12) est solidaire de la membrane de pression (4) dans la région du bourrelet de bordure (6).

3. Plaque-membrane suivant la revendication 1 ou 2, caractérisée en ce que le cadre de retenue (12) présente, sur sa face périphérique, une entretoise d'appui (32) périphérique pour la saillie (34) en forme de languette.

4. Plaque-membrane suivant l'une des revendications 1 à 3, caractérisée en ce que la saillie (34) en forme de languette présente un élément d'étanchéité (35) venant en applique contre l'entretoise d'appui (32) du cadre de retenue (12).

5. Plaque-membrane suivant l'une des revendications 1 à 4, caractérisée en ce que la saillie (34) en forme de languette est fixée au cadre de retenue (12).

6. Plaque-membrane suivant l'une des revendications 1 à 5, caractérisée en ce que l'encadrement de plaque (3) présente, sur son bord (33) tourné vers le cadre de retenue (12), entre, d'une part, la zone d'appui du bourrelet de bordure (6) et, d'autre part, la saillie (34) en forme de languette, un évidement (38) en forme de canal s'étendant sur au moins une partie du pourtour et communiquant, par des alésages, respectivement avec les alésages de canal (11) à filtrat et liquide de lavage s'étendant dans l'encadrement de plaque (3), et que dans le cadre de retenue (12) sont disposés des alésages transversaux (37) qui relient, respectivement, la chambre à l'évidement (38) en forme de canal.
